# EUROPEAN PATENT APPLICATION

(11) **EP 2 725 542 A1**
(43) Date of publication of application: **30.04.2014**
(21) Application number: 13190014.4
(22) Date of filing: 24.10.2013
(51) Int. Cl.: G06Q 30/06

(54) **A system and method for enabling deployment variability in a point of sale**

(30) Priority: 29.10.2012 IN MU31252012
(71) Applicant: Tata Consultancy Services Limited, Maharashtra (IN)
(72) Inventor: Mohanty, Ajit, Orissa (IN)
(74) Representative: Lloyd, Patrick Alexander Desmond

(57) **Abstract**

A method and system for deployment variability in a Point of Sale wherein the deployment variability includes a plurality of scenarios, the deployment variability wherein in one of a scenario, a POS Till, a POS Back Office, and a POS Central Instance run in a standalone mode and in another scenario, the POS Till, the POS Back Office, and the POS Central Instance run on a n-tiered mode, based on the requirement, wherein transition from one mode to another mode does not involve complexity of data being replicated.

## Description

### FIELD OF THE INVENTION

The present disclosure relates to a system and method for deployment variability in Point of Sale (POS) operations. More specifically, the present disclosure relates to system and method of deployment variability in the Point of Sale wherein the deployment can be a standalone model or in an n-tiered mode, based on the business needs, without replicating the Point of Sale data across multiple levels of organizations

### BACKGROUND OF THE INVENTION

In retail business environment, superior customer service always has the power to transform an occasional buyer into a loyal customer. Towards leveraging this potential, retail outlets seek to upgrade legacy points of service and enhance customer service with efficient-in store operations. Further, there is a genuine requirement for retailers to shift product centric assortment planning to consumer assortment planning so that retailers could create tailored assortments. In addition to this, retail outlets now are focusing on localization of assortments to cater to the unique needs of customer segments and thus are required to synchronize assortment planning with merchandise planning, space planning and allocation. To fulfill this requirement, several POS deployments have come up in the market.

Typical POS products comprise a POS Till, a POS Back Office and a POS Central Instance with specific deployment environment wherein the deployment is based on the number of stores and their mode of operations. The POS is deployed in such a manner that the POS Till runs on a standalone infrastructure, the POS Back Office runs on servers installed at store level, and the POS Central Instance runs on servers deployed at a corporate level. However, with this type of set-up, there is always a possibility of the POS data being replicated thereby creating a bottleneck for the product vendor and also for the retailer.

The requirements of the reatilers may also vary, some retailers POS system require the POS Till to be available all the time with or without other relevant modules. While, some retailers require the POS Till to post the data to the corporate data center quickly so that the customer is quickly serviced in any chain store to provide quick loyalty benefits. To meet both the needs at a single point is challenging and makes POS configuration complicated.

It would be advantageous therefore to provide a cost-effective Deployment variability in POS configurations that could cater to the needs of small to big retail outlets wherein the deployment variability model includes need of servers on need basis having different configurations for deployment to avoid replication of POS data irrespective of the deployment environment. Therefore making it possible to deploy POS system in a variety of ways to meet the need of retailers.

### SUMMARY OF THE INVENTION

The invention is defined by the independent claims to which reference should be made. Preferred features are set out in the dependent claims.

In one embodiment of the invention a transition between a standalone mode and an n-tiered mode of a deployment variability in a Point of Scale does not involve Point of Sale before transactional data replication.

A preferred embodiment of the invention can provide a method and system for deployment variability having different deployment variables for different scenarios, wherein, in one instance the business logic of a POS Till, a POS Back Office, and a POS Central Instance remain in a standalone mode and in other instance the business logic of the POS Till, the POS Back Office, and the POS Central Instance could be incorporated in a store, regional or corporate central server, based on the requirement.

A preferred embodiment of the invention can provide deployment variability in a POS, wherein the deployment variability in the POS is deployed in a plurality of scenarios based on requirement.

### BRIEF DESCRIPTION OF THE DRAWINGS

The above-mentioned and other features and advantages of the various embodiments of the disclosure, and the manner of attaining them, will become more apparent and will be better understood by reference to the accompanying drawings, wherein:
**Figure 1** Prior art, deployment view for a standalone POS Till, POS Back Office, and POS Central Instance.
**Figure 2** illustrates a store centric deployment according an embodiment.
**Figure 3** illustrates a store centric deployment according another embodiment.
**Figure 4** illustrates a regional deployment model according an embodiment.
**Figure 5** illustrates a central deployment model according an embodiment.

### DETAILED DESCRIPTION

It is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

The purpose of this procedure illustrated is to offer a single point solution with wide-ranging features of deployment variability to cater to the business and operational needs of retail outlets across multiple formats and geographies. The deployment variability model for a POS according to the present disclosure seamlessly integrates with Store Inventory Management and the model provides scalability and ease of integration with corporate and other store systems.

The deployment variability in the point of sale (POS) system according to the disclosure has a plurality of scenarios, at least five, as will be explained in the subsequent description; the five scenarios are based on the business model and size of the business.

According to an exemplary embodiment of the present disclosure, transition from one scenario to another scenario does not involve any complexity of data being replicated. Also switching from one variability to other doesn't warrant changes in the application, rather everything is managed through configurations.

Reference will now be made in detail to the exemplary embodiment(s) of the present disclosure, as illustrated in the accompanying drawings. Whenever possible, the same reference numerals will be used throughout the drawings to refer to the same or like parts.

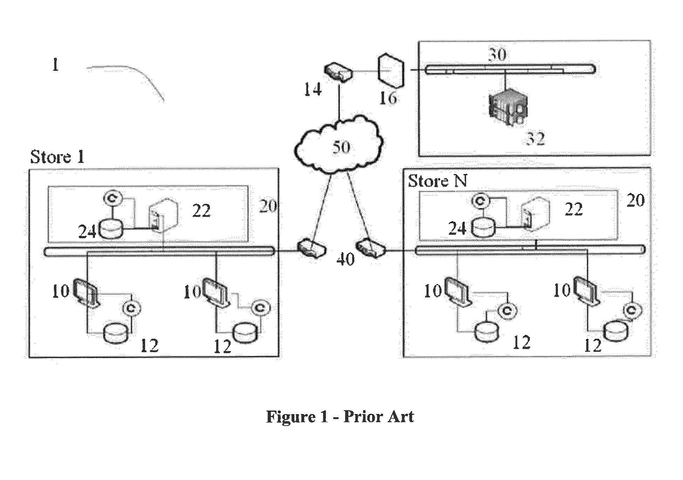

**Figure 1** illustrates a Prior art wherein a variable deployment model **(1)** in a standalone mode, comprises a plurality of Point-of-sale (POS) Tills **(10),** a plurality of POS Back Offices **(20),** a plurality of Back Office Server **(22),** a plurality of POS Central Instances **(30),** a Router **(40),** a WAN **(50)** and a firewall **(60).** The plurality of POS Tills **(10)** further comprises a Computer system, Bar code Scanner, Cash Drawer, Card Scanner, printer and combination thereof. The plurality of POS Central Instances **(30)** further comprsis a central DB cluster. In the present scenario, the POS Tills **(10),** POS Back offices **(20)** and POS Central Instances **(30)** run in a standalone mode that is they have their own business logic and all their databases configured with a single server **(22, 32).** A data distribution software (Ex: Symmetric DS, MQ etc.) synchronizes the data between POS Tills **(10),** POS Back offices **(20)** and POS Central Instances **(30).** The present configuration of of the aforementioned system enables, the POS Tills **(10)** perform all the retail operations wherein the POS Back Offices **(20)** and the POS Back office server **(22)** of POS Back office **(20)** updates through the POS Central Instances **(30)** at regular intervals to update the customer service Desk, Reporting dashboards etc. The individual POS Tills **(10)** connected to the POS Back office **(20)** update themselves. The report of each POS Till **(10)** is retrieved by the POS Back office **(20)** and sent to the POS Central Instance **(30)** periodically. The POS Tills **(10)** and POS Back offices **(20)** are collectively connected to the POS Central Instance **(30)** through the router **(40)** at each retail store connected through the Wide area network (WAN) **(50).** The firewall **(60)** acts as a protective layer to ensure data privacy and security.

The operations of the POS Till **(10)** is not affected if either of the POS Central instance **(30)** or POS Back office **(20)** breaks down as the POS Till **(10),** POS Back Office **(20),** and POS Central Instance **(30)** perform on standalone mode. The data of each POS Till is stored in their respective individual databases such as POS DB **(12)** and Store DB **(24).** A data distribution software (not shown) provides data to the instances when required.

According to an explanary embodiment the system **(1)** is deployed in a store centric deployment.

According to the POS system as illustrated by Figure 1 any outbound or inbound data, to or from POS goes through Central Instance (CI). For example Item data flow from merchant's enterprise application and flows to POS via CI. Similarly any Sales transaction generated in a POS Register flows to the merchant's enterprise system via POS CI. Hence typically POS CI acts as the interface unit to the enterprise of the merchant.

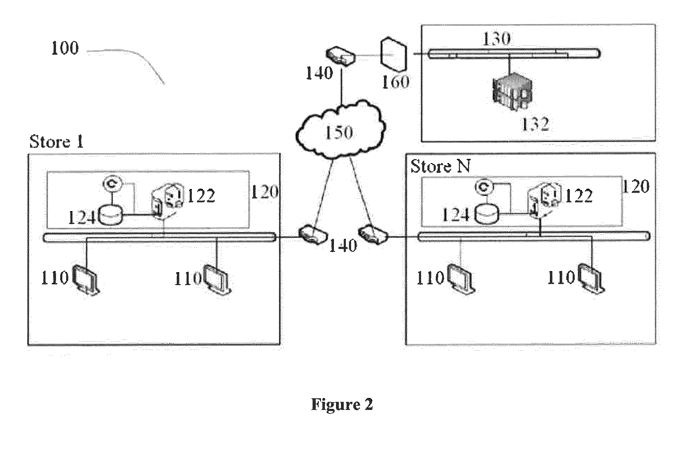

**Figure 2** illustrates a store centric deployment according an embodiment wherein a second scenario is illustrated from the plurality of scenarios. According to the present deplyoment of point of sale (POS) system **(100),** the system comprises a plurality of POS Till **(110),** a plurality of Back Office **(120),** a plurality of communication routers **(140),** a communcation network **(150),** a firewall **(160)** and a POS Central Instance **(130).** According to the present embodiment the point of sale (POS) system **(100)** does not consist of POS data base, POS DB **(12)** as disclosed in the prior art. Each of the POS Till **(110)** may directly communicates with a Back Office Server **(122),** and Back Office Database **(124).** The POS Till **(110)** updates via the Back Office **(120).** An application embedded (Not Shown) in the POS Till **(110)** may enable the elimination of the POS database. The embedded application may comprise of a business module, a dashboard module and a commuincation module. The buiness module consist of an undelying business logic for the said POS Till **(110),** whereas the dashboard module may enable a user to access the store database, and process a sale transaction through communication module. The communication module connects external device/readers as well as the internal systems.

The Back Office Server **(122),** further communicates over the communication network **(150)** with the POS Central Instance **(130).** The Back Office server **(122)** is updated directly by the POS Central Instance **(130),** further a plurality of data stored is synchronized between the Back Office Database **(124)** and central instance database **(132).** In the present embodiment the back office **(120)** including back office server **(122)** and back office database **(-12)** may have an independent set of business logic module comapred to the Central Instance **(130).** The embedded application on the POS Till **(110)** connects with the back office server **(122)** and updates the dasboard module or the business module as and when available.

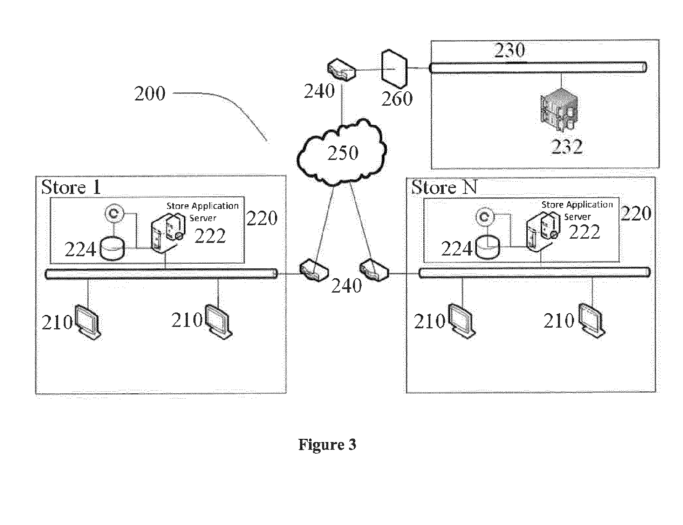

**Figure 3** illustrates a store centric deployment according another embodiment wherein a third scenario is illustrated from the plurality of scenarios. A deployment variability point of sale (POS) system **(200)** comprises a POS Till **(210),** a POS Back Office **(220),** a Store Application Server **(222),** a Central Instance **(230)** having a central DB cluster **(232),** a communication network **(250),** a Router **(240),** and a firewall **(260).** The POS Till **(210),** POS Back Office **(220)** and POS Central Instance **(230)** may run in an environment having a graphical user interface (GUI) client whereas the Business Logic of POS Till **(210)** and POS Back Office **(220)** may rest in the Store Application Server **(222)** along with the store database **(224).** However, the business logic of POS Central Instance may be stored in Central DB cluster / Corporate Central Server **(232).** A Data Distribution Software may synchronize the data between the store instance and corporate.

Moreover, the POS Till **(210)** and POS Back Office **(220)** can act as a dump where the retail and Business operations for POS Till **(210)** and POS Back Office **(220)** can take place respectively. The POS Till **(210)** and POS Back Office **(220)** may comprise of a system having GUI for performing retail operations and the related information may be updated or retrieved from Store application server **(222)** and may be provide the data to the POS Tills **(210)** and POS Back Office **(220)** of the particular store. Further, the POS Till **(210)** have its own offline database to retrieve data when required. In the third sceneario, the Store Application Server **(222)** may be the medium for the store to communicate with the POS Central Instance **(230)** through routers **(240)** and coomuncation network **(250).** A firewall **(260)** is implemented to provide security and privacy of data.

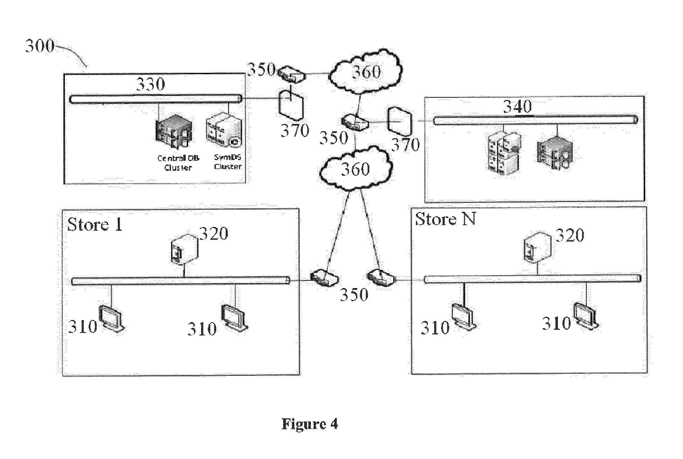

**Figure 4** illustrates a variable deployment model **(300)** for a regional centric setup, wherein a fourth scenario is illustrated from the plurality of scenarios, comprising of a POS Till **(310),** a POS Back Office **(320),** a Central Instance **(330)** having a central DB cluster (Not marked) and System DB cluster (Not marked), a Regional Data Center **(340)** having a regional application server cluster (Not marked) and regional DB cluster (Not marked), a router **(350),** a communication network **(360),** and a firewall **(370).** In this scenario, the POS Till **(310)** and the POS Back Office **(320)** acts as a dump having a GUI that has only a browsing functionality for all the retail and business operations that takes place in a retail store. The Business logic and database for all the instances are stored in the Regional Data Center **(340).** In this case, a plurality of retail outlets across multi-locations in a particular region are processed through a Regional data center **(340)** that could communicate with each retail store in that particular location of that region. The Regional data center **(340)** monitors all the retail outlets across the locations in that particular region, wherein all the retail outlets communicate with the Regional data center **(340)** through a router **(350)** and the communication network **(360).** The collected data from the regional data center **(340)** is sent to the Corporate Instance **(350)** through the router **(350)** and the communication network **(360).** A firewall **(370)** is implemented between the router and data center to provide security and privacy of data.

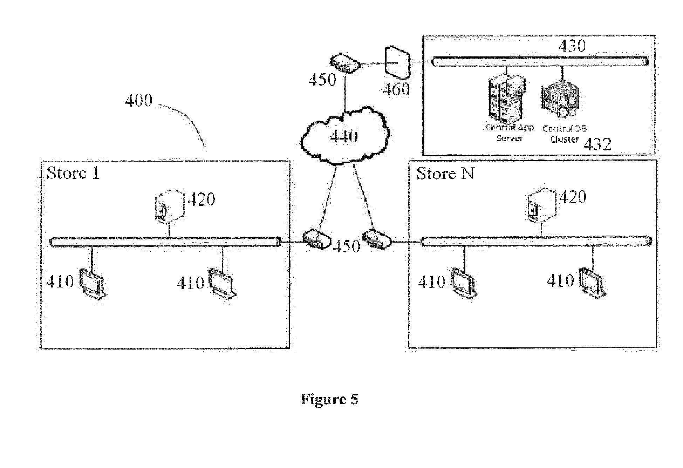

**Figure 5** illustrates a fifth scenario from the plurality of scenarios wherein a deployment model **400** for a Centralized setup having a POS Till **(410),** POS Back Office **(420),** and a Central Instance **(430)** having a central DB cluster, the Central Instance **(430)** acting as a Central application Server and a communcation network **(440).** The POS Till **(410),** POS Back Office **(420),** and POS Central Instance **(430)**,each have their own respective GUI clients whereas the business logic and database of POS Till **(410),** POS Back Office **(420),** remain in the Central DB Cluster **(432)** of POS Central Instance **(430).** The POS Till **(410)** and POS Back Office **(420)** act as a dump on an application for the retail/business operations of the retail outlet wherein the entire data gets updated in the POS Central Instance **(430).** Moreover, the Business logic required for the retail/business operation in the retail outlet is acquired from the Central DB Cluster **(432)** of Central Instance **(430)** wherein the entire business related feeds of the retail store for a particular day is stored in the same Central DB cluster **(432)** of Central Instance **(430).** Each retail outlet in various locations communicates directly with Central Instance **(430).** The POS Till **(410)** and POS Back Office **(420)** are connected to Central Instance **(430)** through the communication network **(440)** that is further connected over multiple routers **(450)** and firewall **(460)**for data security and privacy.

## Claims

1. A point of sale (POS) system for enabling deployment variability, the Point of Sale (POS) system comprising:
a POS Till **characterized by** absence of a POS database;
a POS Back Office in communication with the POS Till;
a POS Central Instance in communication with the POS Back Office; and
a Data Distribution Software.

2. The point of sale (POS) system of claim 1, further comprises a plurality of scenarios for deployment variability.

3. The point of sale (POS) system of claim 2, wherein in a first scenario of the plurality of scenarios, the POS Till, the POS Back Office, and the POS Central Instance run on the standalone mode having a plurality of business logics configured to a single server.

4. The point of sale (POS) system of claim 2, wherein in a second scenario of the plurality of scenarios, the POS Till and the POS Back Office have a plurality of business logics configured to a store application server, wherein the POS Till and the POS Back Office are communicatively coupled with a store application server.

5. The point of sale (POS) system of claim 4, wherein data of POS Till, POS Back Office, and POS Central Instance is synchronized with the store application server using the Data Distribution Software.

6. The point of sale (POS) system of claim 2, wherein in a third scenario of the plurality of scenarios, the POS Till, the POS Back Office have a plurality of business logics configured to a Regional data center.

7. The point of sale (POS) system of claim 2, wherein in a fourth scenario of the plurality of scenarios, the POS Till, the POS Back Office and the POS Central Instance have a thin GUI, wherein the POS Till, the POS Back Office and the POS Central Instance are communicatively coupled with a central database.

8. The point of sale (POS) system of claim 2, wherein in a fifth scenario of the plurality of scenarios, the POS Till, the POS Back Office and the POS Central Instance have a thin GUI, wherein a plurality of business logics and a database of the POS Till, the POS Back Office, and the POS Central Instance are communicatively coupled with a central application server.

9. A method for enabling deployment variability in a Point of Sale system between a standalone mode and a n-tiered mode, the method comprising the steps of:
providing a POS Till;
communicatively coupling a POS Back Office with the POS Till;
communicatively coupling a POS Central Instance with the POS Back Office; and
synchronizing data between at least two of the POS Till, the POS Back Office, and the POS Central Instance with Data Distribution Software, wherein a transition between the standalone mode and the n-tiered mode does not involve Point of Sale transactional data replication.

10. The method of claim 9, further comprising the step of running the POS Till, the POS Back Office, and the POS Central Instance on the standalone mode having a plurality of business logics configured to a single server.

11. The method of claim 9, wherein the POS Till and the POS Back Office have a plurality of business logics configured to a store application server, wherein the POS Till and the POS Back Office are communicatively coupled with a store application server.

12. The method of claim 9, wherein the POS Till, the POS Back Office have a plurality of business logics configured to a Regional data center.

13. The method of claim 9, wherein the POS Till, the POS Back Office and the POS Central Instance have a thin GUI, wherein the POS Till, the POS Back Office and the POS Central Instance are communicatively coupled with a central database.

14. The method of claim 9, wherein the POS Till, the POS Back Office and the POS Central Instance have a thin GUI, wherein a plurality of business logics and a database of the POS Till, the POS Back Office, and the POS Central Instance are communicatively coupled with a central application server.

15. A point of sale (POS) system for enabling deployment variability, the Point of Sale (POS) system comprising:
a POS Till **characterized by** absence of a POS database;
a POS Back Office in communication with the POS Till;
a POS Central Instance in communication with the POS Back Office; and
a Data Distribution Software, wherein a transition between standalone mode and a n-tiered mode of a deployment variability in a Point of Sale does not involve Point of Sale transactional data replication.
